# EUROPEAN PATENT SPECIFICATION

(11) **EP 0 907 004 B1**
(45) Date of publication and mention of the grant of the patent: **12.03.2003**
(21) Application number: 98307530.0
(22) Date of filing: 16.09.1998
(51) Int. Cl.: F01D 5/18, G01K 13/02, F01D 17/08

(54) **Arrangement of a gas temperature sensing device in a gas turbine vane**
Anordung einer Gastemperaturmessvorrichtung in einer Gasturbinenschaufel
Agencement d'un dispositif de mesure de température de gaz dans une aube de turbine à gaz

(30) Priority: 01.10.1997 GB 9720719
(43) Date of publication of application: 07.04.1999
(73) Proprietor: ROLLS-ROYCE PLC, London, SW1E 6AT (GB); Rolls-Royce Deutschland Ltd & Co KG, 15827 Dahlewitz (DE)
(72) Inventor: White, Adrian James, Mickleover, Derby DE3 5XA (GB); Connelly, Jeffrey Arthur, Chellaston, Derby DE73 1RJ (GB); Haarmeyer, Jörg, 15834 Rangsdorf (DE); Negulescu, Dimitrie, 14163 Berlin (DE)

(56) References cited:
- FR-A- 2 680 872
- GB-A- 734 702
- GB-A- 1 264 179
- US-A- 2 946 221
- US-A- 3 348 414
- US-A- 4 433 584
- US-A- 4 605 315

## Description

This invention relates to a gas turbine engine gas temperature sensing device and in particular to a sensing device for use in determining the temperature of gases flowing through the turbine of such an engine.

It is necessary to determine the temperature of gases passing through the turbine of a gas turbine engine in order to provide necessary data for the engine's fuel control system. Gas temperature data is also necessary for cockpit display if the gas turbine engine in question powers an aircraft.

One way of monitoring turbine gas temperatures is to place a suitable thermocouple in the gas stream of interest. However, this can lead to undesirable aerodynamic losses in that gas stream. Additionally, the thermocouple is prone to damage by foreign objects that may pass through the turbine.

If the turbine contains hollow aerofoil vanes, aerodynamic losses can be avoided by placing a thermocouple inside one of the vanes. Suitably dimensioned orifices are provided in the suction and pressure flanks of the vane so that turbine gases flow through the vane from the pressure flank to the suction flank and hence over the thermocouple. It is also known, for instance from US-A-4605315, GB-734702A, US-A-2946221 and US-A-3348414 to provide an orifice on the leading edge of the vane to direct turbine gases over the thermocouple. While such arrangements can be effective in providing a reliable indication of turbine gas temperature under most operating conditions, difficulties can still arise during extremes of engine operation. For instance, during engine start-up, which can be either on the ground or in flight, there can be insufficient difference in pressure between the vane flanks to provide a gas flow through the vane and over the thermocouple. Consequently, the gas temperature signal provided by the thermocouple is not necessarily truly indicative of the temperature of the gases flowing through the turbine. This, of course, could have a detrimental effect upon the efficient operation of the engine.

It is an object of the present invention to provide a gas turbine engine gas temperature sensing device that is capable of providing an accurate indication of the temperature of gases passing through the turbine of such an engine under a wider range of engine operating conditions than has heretofore been the case.

According to the present invention, a gas turbine engine gas temperature sensing device comprises an aerofoil cross-section vane for location in a gas stream, said vane having a leading edge, a trailing edge, pressure and suction flanks interconnecting those leading and trailing edges, and a chamber therein, which chamber in turn contains a gas temperature sensor, said gas outlet being in communication with a region of gas at a pressure lower than that of gas adjacent said gas inlet to facilitate the flow of gas from said inlet to said outlet through said chamber, said gas inlet being adapted to direct gas on to said gas temperature sensor prior to its exhaustion through said gas outlet, said gas inlet being in communication with a region of the exterior of said suction flank adjacent said leading edge to direct gas from that region on to said gas temperature sensor.

The present invention ensures that turbine gases flow over the gas temperature sensor under a wide range of operating conditions.

Said gas inlet is preferably positioned between the stagnation streamline of said gas flow incident upon said vane under engine starting conditions and the stagnation streamline of said gas flow incident upon said vane under other engine operating conditions.

Said gas outlet may be positioned on said suction surface of said vane at a position downstream of said gas inlet.

Said inlet may be constituted by one end of a nozzle which extends into said chamber, the other end of which is positioned adjacent said sensor to direct said gas on to said gas temperature sensor.

Said nozzle is preferably of progressively decreasing cross-sectional area in the direction of gas flow towards said temperature sensor.

Preferably said inlet is defined by longitudinally extending edges which are of curved cross-sectional configuration so as to facilitate the smooth flow of gases into said nozzle.

Said nozzle may progressively change from a generally square cross-sectional shape at said inlet to a generally circular cross-sectional shape at its outlet.

Said nozzle may have a longitudinal axis which is so aligned with respect to the remainder of said vane that the degree of turning of said gas flow to enter said nozzle is minimised.

Said chamber is preferably located adjacent the leading edge region of said vane.

The present invention will now be described, by way of example, with reference to the accompanying drawings in which:
Figure 1 is a schematic sectioned side view of a ducted fan gas turbine engine having a gas temperature sensing device in accordance with the present invention.
Figure 2 is a partially exploded view of some of the turbine stator vanes of the gas turbine engine shown in Figure 1, one of which additionally functions as a gas temperature sensing device in accordance with the present invention.
Figure 3 is a sectioned plan view of the front portion of the turbine stator vane shown in Figure 2 that additionally functions as a gas temperature sensing device in accordance with the present invention.
Figure 4 is a view on arrow A of Figure 3.
Figure 5 is a view on section line B-B of Figure 3.

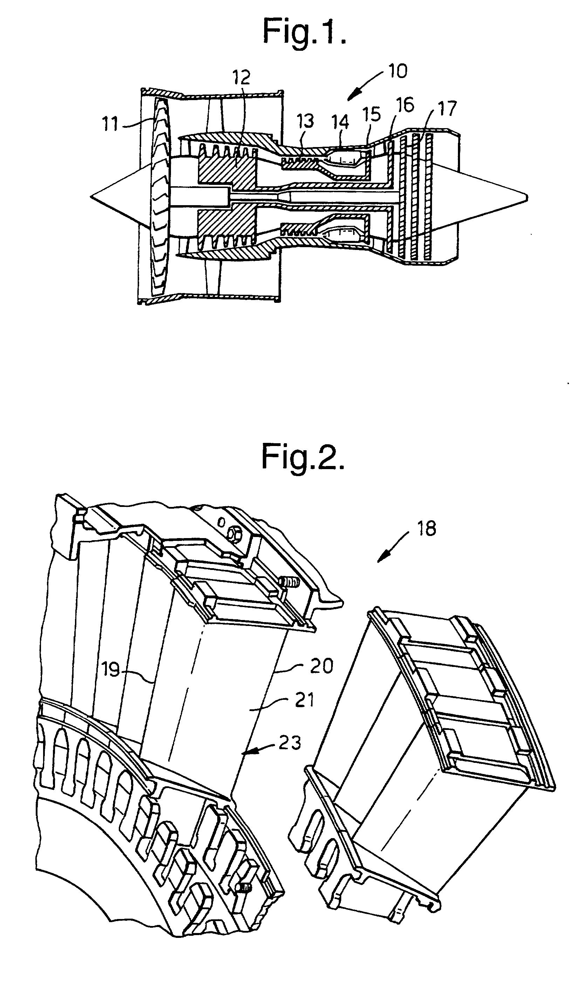

With reference to Figure 1, a ducted fan gas turbine engine generally indicated at 10 is of conventional general configuration comprising a propulsive fan 11, intermediate and high pressure air compressors 12 and 13 respectively, combustion equipment 14 and high, intermediate and low pressure turbines 15, 16 and 17 respectively. The present invention is particularly concerned with the low pressure turbine 17 that powers the fan 11. The structure and operation of the remaining portions of the engine 10 are well known to those skilled in the art and will not, therefore, be described in further detail.

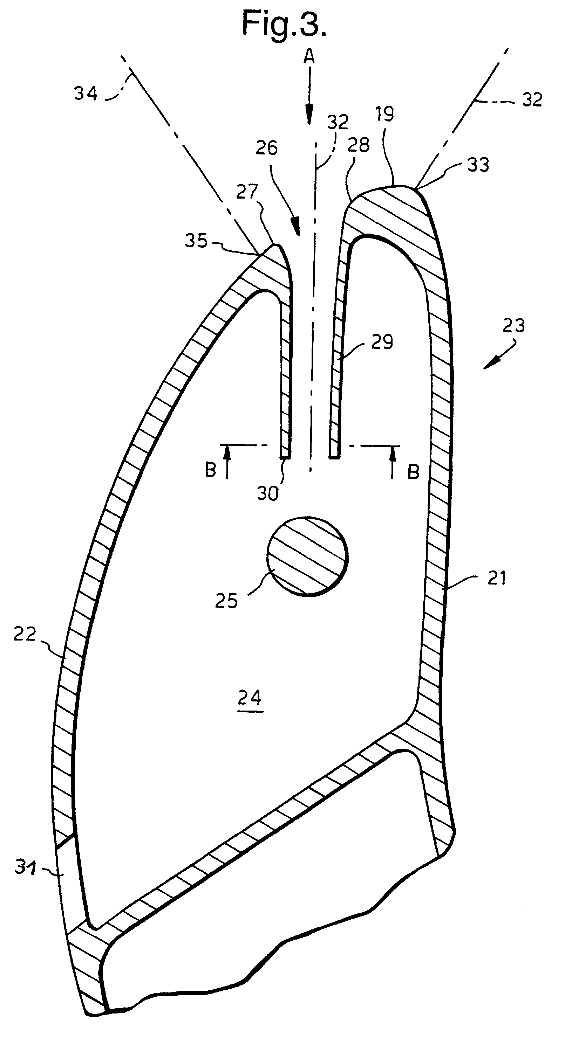

The low pressure turbine 17 comprises, in the conventional manner, axially alternate annular arrays of rotor blades and stator vanes. Part of one of those arrays of stator vanes 18 can be seen if reference is now made to Figures 2 and 3.

The stator vanes in the array 18 are all the same conventional aerofoil cross-section external configuration. Thus each vane has a leading edge 19, a trailing edge 20, and pressure and suction flanks 21 and 22 respectively.

One of the stator vane array 18, designated 23 in Figure 2, is provided with a chamber 24 internally of the region adjacent its leading edge 19 as can be seen in Figure 3. The chamber 24 contains a thermocouple 25 that is of a type suitable for measuring the temperature of gases flowing through the low pressure turbine 17. The thermocouple 25 is of conventional construction and will not, therefore, described in any further detail.

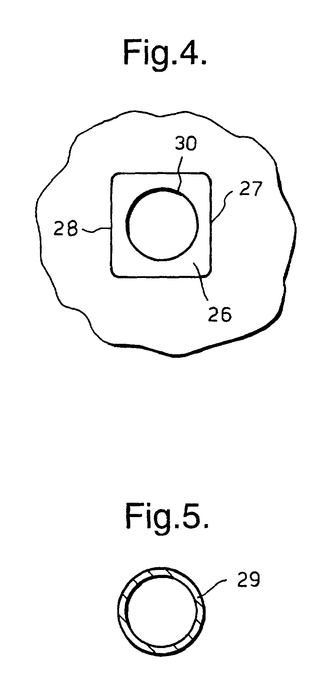

In order to provide the thermocouple 25 with communication with those gases, a gas inlet 26 is provided in the suction flank 22 of the vane 23 adjacent its leading edge 19. The gas inlet 26 is, as can be seen in Figure 4, of generally square cross-sectional configuration at the external surface of the stator vane 23. However, the longitudinally extending edges 27 and 28 of the gas inlet 26 are, as can be seen in Figure 3, of curved cross-sectional shape so as to facilitate the smooth flow of turbine gases into the inlet 26 as will be described later.

The inlet 26 constitutes the upstream end of a nozzle 29 that extends into the chamber 24 and is aligned with the thermocouple 25. The nozzle 29 changes progressively from the generally square cross-sectional configuration of its inlet 26 to a circular cross-sectional configuration of smaller cross-sectional area at its outlet 30. This combination of change in cross-sectional shape and reduction in cross-sectional area of the nozzle 29 has the effect of accelerating the gas flow through the nozzle 29 and suppressing any regions of turbulent flow that may have formed in the gas entering the nozzle 29. However, the dimensions of the nozzle 29 are selected such that they do not provide significant constriction of that gas flow.

The nozzle 29 is so disposed that the turbine gases exhausted from it are directed on to the thermocouple 25, thereby enabling the thermocouple 25 to provide an output signal that is representative of the temperature of the gases. The gases then flow towards a chamber outlet 31 that is positioned in the suction flank of the vane 23. The chamber outlet 31 is located on a portion of the vane suction flank 22 where the overall turbine gas pressure is lower than it is in the vicinity of the nozzle inlet 26. It is this turbine gas pressure gradient between the inlet 26 and outlet 31 which ensures that there is a constant flow of turbine gases through the nozzle 29 which flow over the thermocouple 25 before being exhausted through the outlet 31 to rejoin the turbine gas flow over the exterior surfaces of the vane 23.

The turbine gases which are incident upon the leading edge 19 of the vane 23 divide and flow in opposite directions to pass over the pressure and suction flanks 21 and 22 respectively of the vane 23. The mean position 33 at which the gases divide under normal operating conditions to flow over the pressure and suction flanks 21 and 22 is defined by a stagnation streamline 32 that extends normal to the vane 23 external surface. Thus, some of the turbine gases flowing over the suction flank 22 from the stagnation streamline 32 are diverted into the inlet 26 and nozzle 29. The curvature of the inlet edge 28 is so arranged that the energy losses in that flow are as small as possible.

During gas turbine engine start-up, which is an extreme engine operating condition, the stagnation streamline 34 is located at a mean position 35 that is on, and normal to, the suction flank 22. It is also on the opposite side of the inlet 26 to the vane leading edge 19. Under these conditions, the turbine gases that flow over the pressure flank 21 must first flow across a small portion of the suction flank 22 before reaching the leading edge 19 and subsequently the pressure flank 21. This takes the flow across the nozzle inlet 26 and so, in view of the pressure gradient between the inlet 26 and outlet 31, some of the turbine gases flow into the inlet 26. The curved cross-sectional configuration of the gas inlet edge 27 ensures that such a flow is as non-turbulent as possible.

It will be seen, therefore, that at any one point during a normal operating cycle of the engine 10, turbine gases will flow across the nozzle inlet 26 in one of two opposite directions. Those directions will depend upon whether the engine is starting, or operating under steady state or changing conditions. Consequently, during engine operation, some of that flow always passes through the nozzle 29 and on to the thermocouple 25. The axis 32 of the nozzle 29 is so orientated with respect to the vane 23 outer surface local thereto that the flow of turbine gases into the nozzle 29 is as smooth as possible. As a result of this, the thermocouple 25 provides an accurate indication of turbine gas temperature under a very wide range of engine operating conditions. Consequently, effective engine control and operation over that range of conditions are ensured.

## Claims

1. A gas turbine engine gas temperature sensing device comprising an aerofoil cross-section vane (23) for location in a gas stream, said vane (23) having a leading edge (19), a trailing edge (20), pressure and suction flanks (21,22) interconnecting those leading and trailing edges, and a chamber therein, said chamber (24) in turn containing a gas temperature sensor (24), said chamber (24) having a gas inlet (26) and a gas outlet (31), said gas outlet (31) being in communication with a region of gas at a pressure lower than that of gas adjacent said gas inlet (26) to facilitate the flow of gas from said inlet (26) to said outlet (31) through said chamber (24), said gas inlet (26) being adapted to direct gas on to said gas temperature sensor (25) prior to its exhaustion through said gas outlet (31), **characterised in that** said gas inlet (26) is in communication with a region of the exterior of said suction flank (22) adjacent said leading edge (19) to direct gas from that region on to said gas temperature sensor (25).

2. A gas turbine engine gas temperature sensing device as claimed in claim 1 **characterised in that** said gas inlet (26) is positioned between the stagnation streamline (34) of said gas flow incident upon said vane under engine starting conditions and the stagnation streamline (32) of said gas flow incident upon said vane (23) under other engine operating conditions.

3. A gas turbine engine gas temperature sensing device as claimed in claim one or claim 2 **characterised in that** said gas outlet (31) is positioned on said suction surface (22) of said vane (23) at a position downstream of said gas inlet (26).

4. A gas turbine engine gas temperature sensing device as claimed in any one preceding claim **characterised in that** said inlet (26) is constituted by one end of a nozzle (29) which extends into said chamber (24), the other end of which is positioned adjacent said sensor (25) to direct said gas on to said gas temperature sensor (25).

5. A gas turbine engine gas temperature sensing device as claimed in any one preceding claim **characterised in that** said nozzle (29) is of progressively decreasing cross-sectional area in the direction of gas flow towards said temperature sensor (25).

6. A gas turbine engine temperature sensing device as claimed in any one preceding claim **characterised in that** said inlet (26) is defined by longitudinally extending edges which are of curved cross-sectional so as to facilitate the smooth flow of gas into said nozzle (29).

7. A gas turbine engine temperature sensing device as claimed in any one preceding claim **characterised in that** said nozzle (29) progressively changes from a generally square cross-sectional shape at its inlet (26) to a generally circular cross-sectional shape at its outlet (30).

8. A gas turbine engine temperature sensing device as claimed in any one preceding claim **characterised in that** said nozzle (29) has a longitudinal axis (32) which is so aligned with respect to the remainder of said vane (23) that the degree of turning of said gas flow to enter said nozzle (29) is minimised.

9. A gas turbine engine temperature sensing device as claimed in any one preceding claim **characterised in that** said chamber (24) is located adjacent the leading edge region of said vane (23).

10. A gas turbine engine temperature sensing device as claimed in any one preceding claim **characterised in that** said vane (23) is so configured as to be a turbine vane.

11. A gas turbine engine temperature sensing device as claimed in any one preceding claim **characterised in that** said temperature sensor (25) is a thermocouple.

## Patentansprüche

1. Gastemperatur-Meßvorrichtung für ein Gasturbinentriebwerk mit einer Leitschaufel (23) mit profiliertem Querschnitt, die in einem Gasstrom zu liegen kommt, wobei die Leitschaufel (23) eine Vorderkante (19), eine Hinterkante (20), eine Druckflanke (21) und eine Saugflanke (22) aufweist, die die Vorderkante mit der Hinterkante verbinden, wobei in der Leitschaufel eine Kammer ausgebildet ist und die Kammer (24) einen Gastemperatursensor (25) aufnimmt und einen Gaseinlaß (26) und einen Gasauslaß (31) besitzt, wobei der Gasauslaß (31) mit einem Bereich des Gases in Verbindung steht, das unter einem Druck steht, der niedriger ist als der Druck des Gases benachbart zum Gaseinlaß (26), um eine Gasströmung von dem Einlaß (26) nach dem Auslaß (31) durch die Kammer (24) zu gewährleisten, wobei der Gaseinlaß so ausgebildet ist, daß das Gas auf den Gastemperatursensor (25) geleitet wird, bevor es aus dem Gasauslaß (31) austritt,
**dadurch gekennzeichnet, daß** der Gaseinlaß (26) in Verbindung mit einem Bereich auf der Außenseite der Saugflanke (22) benachbart zum Vorderrand (19) steht, um eine Gasströmung von jenem Bereich auf den Gastemperatursensor (25) zu leiten.

2. Gastemperatur-Meßvorrichtung für ein Gasturbinentriebwerk nach Anspruch 1,
**dadurch gekennzeichnet, daß** der Gaseinlaß (26) zwischen der Stagnationsstromlinie der auf die Leitschaufel unter Triebwerks-Startbedingungen einfallenden Strömung und der Stagnationsstromlinie (32) der auf die Leitschaufel (23) unter anderen Triebwerks-Arbeitsbedingungen auftreffenden Gasströmung angeordnet ist.

3. Gastemperatur-Meßvorrichtung für ein Gasturbinentriebwerk nach Anspruch 1 oder Anspruch 2,
**dadurch gekennzeichnet, daß** der Gasauslaß (31) auf der Saugseite (22) der Leitschaufel (23) an einer Stelle stromab des Gaseinlasses (26) liegt.

4. Gastemperatur-Meßvorrichtung für ein Gasturbinentriebwerk nach einem der vorhergehenden Ansprüche,
**dadurch gekennzeichnet, daß** der Einlaß (26) von einem Ende einer Düse (29) gebildet ist, die sich in die Kammer (24) hinein erstreckt, während das andere Ende der Düse benachbart zu dem Sensor (25) liegt, um die Gasströmung auf den Gastemperatursensor (25) zu richten.

5. Gastemperatur-Meßvorrichtung für ein Gasturbinentriebwerk nach einem der vorhergehenden Ansprüche,
**dadurch gekennzeichnet, daß** die Düse (29) eine progressiv abnehmbare Querschnittsfläche in Richtung der Gasströmung nach dem Temperatursensor (25) aufweist.

6. Gastemperatur-Meßvorrichtung für ein Gasturbinentriebwerk nach einem der vorhergehenden Ansprüche,
**dadurch gekennzeichnet, daß** der Einlaß (26) durch in Längsrichtung verlaufende Ränder definiert wird, die im Querschnitt so gekrümmt sind, daß eine glatte Strömung des Gases in die Düse (29) hinein bewirkt wird.

7. Gastemperatur-Meßvorrichtung für ein Gasturbinentriebwerk nach einem der vorhergehenden Ansprüche,
**dadurch gekennzeichnet, daß** die Düse (29) sich progressiv von einem allgemein quadratischen Querschnitt am Einlaß (26) auf einen allgemein kreisförmigen Querschnitt am Auslaß (30) ändert.

8. Gastemperatur-Meßvorrichtung für ein Gasturbinentriebwerk nach einem der vorhergehenden Ansprüche,
**dadurch gekennzeichnet, daß** die Düse (29) eine Längsachse (32) hat, die so gegenüber der übrigen Schaufel (23) angeordnet ist, daß das Ausmaß der Ablenkung der Gasströmung zum Eintritt in die Düse (29) minimiert wird.

9. Gastemperatur-Meßvorrichtung für ein Gasturbinentriebwerk nach einem der vorhergehenden Ansprüche,
**dadurch gekennzeichnet, daß** die Kammer (24) benachbart zum Vorderkantenbereich der Leitschaufel (23) angeordnet ist.

10. Gastemperatur-Meßvorrichtung für ein Gasturbinentriebwerk nach einem der vorhergehenden Ansprüche,
**dadurch gekennzeichnet, daß** die Leitschaufel (23) als Turbinen-Leitschaufel ausgebildet ist.

11. Gastemperatur-Meßvorrichtung für ein Gasturbinentriebwerk nach einem der vorhergehenden Ansprüche,
**dadurch gekennzeichnet, daß** der Temperatursensor (25) ein Thermoelement ist.

## Revendications

1. Dispositif de mesure de température de gaz dans une aube de turbine à gaz comprenant une aube (23) transversale de surface portante pour se situer dans un flux de gaz, ladite aube (23) ayant un bord d'attaque (19), un bord arrière (20), des flancs de pression et d'aspiration (21, 22) interconnectant ces bords d'attaque et arrière, et une chambre à l'intérieur, ladite chambre (24) contenant à son tour un détecteur de température de gaz (24), ladite chambre (24) ayant une entrée de gaz (26) et une sortie de gaz (31), ladite sortie de gaz (31) étant en communication avec une zone de gaz à une pression inférieure à celle de gaz adjacente à ladite entrée de gaz (26) pour faciliter le flux de gaz de ladite entrée (26) à ladite sortie (31) à travers ladite chambre (24), ladite entrée (26) étant conçue pour diriger le gaz sur ledit détecteur de température de gaz (25) avant qu'il s'échappe par ladite sortie de gaz (31), **caractérisé en ce que** ladite entrée de gaz (26) est en communication avec une zone de l'extérieur dudit flanc d'aspiration (22) adjacent au dit bord d'attaque (19) pour diriger le gaz de cette zone sur ledit détecteur de température de gaz (25).

2. Dispositif de mesure de température de gaz dans une aube de turbine à gaz selon la revendication 1, **caractérisé en ce que** ladite entrée de gaz (26) est positionnée entre la ligne de flux de stagnation (34) dudit incident de flux de gaz sur ladite aube sous des conditions de démarrage du moteur et la ligne de flux de stagnation (32) dudit incident de flux de gaz sur ladite aube (23) sous d'autres conditions de fonctionnement du moteur.

3. Dispositif de mesure de température de gaz dans une aube de turbine à gaz selon la revendication 1 ou 2, **caractérisé en ce que** ladite sortie de gaz (31) est positionnée sur ladite surface d'aspiration (22) de ladite aube (23) à une position en aval de ladite entrée de gaz (26).

4. Dispositif de mesure de température de gaz dans une aube de turbine à gaz selon l'une quelconque des revendications précédentes, **caractérisé en ce que** ladite entrée (26) est composée par une extrémité d'une buse (29) qui s'étend dans ladite chambre (24), l'autre extrémité de la buse est positionnée de façon adjacente au dit détecteur (25) pour diriger ledit gaz sur ledit détecteur de température de gaz (25).

5. Dispositif de mesure de température de gaz dans une aube de turbine à gaz selon l'une quelconque des revendications précédentes, **caractérisé en ce que** ladite buse (29) est d'une zone transversale diminuant progressivement dans la direction du flux de gaz vers ledit détecteur de température (25).

6. Dispositif de mesure de température de gaz dans une aube de turbine à gaz selon l'une quelconque des revendications précédentes, **caractérisé en ce que** ladite entrée (26) est définie en étendant de façon longitudinale des bords qui sont incurvés de façon transversale afin de faciliter l'écoulement lisse du gaz dans ladite buse (29).

7. Dispositif de mesure de température de gaz dans une aube de turbine à gaz selon l'une quelconque des revendications précédentes, **caractérisé en ce que** ladite buse (29) change progressivement d'une forme transversale généralement carrée à son entrée (26) en une forme transversale généralement circulaire à sa sortie (30).

8. Dispositif de mesure de température de gaz dans une aube de turbine à gaz selon l'une quelconque des revendications précédentes, **caractérisé en ce que** ladite buse (29) a un axe longitudinal (32) qui est aligné conformément au reste de ladite aube (23), de sorte que le degré de rotation dudit flux de gaz à entrer dans ladite buse (29) est réduit.

9. Dispositif de mesure de température de gaz dans une aube de turbine à gaz selon l'une quelconque des revendications précédentes, **caractérisé en ce que** ladite chambre (24) est située de façon adjacente à la zone du bord d'attaque de ladite aube (23).

10. Dispositif de mesure de température de gaz dans une aube de turbine à gaz selon l'une quelconque des revendications précédentes, **caractérisé en ce que** ladite aube (23) est configurée de sorte qu'elle est une aube de turbine.

11. Dispositif de mesure de température de gaz dans une aube de turbine à gaz selon l'une quelconque des revendications précédentes, **caractérisé en ce que** ledit détecteur de température (25) est un thermocouple.
